# EUROPEAN PATENT APPLICATION

(11) **EP 2 919 196 A1**
(43) Date of publication of application: **16.09.2015**
(21) Application number: 13852732.0
(22) Date of filing: 01.10.2013
(51) Int. Cl.: G06T 7/60, G06T 7/00

(54) **IMAGE PROCESSING DEVICE, IMAGE PROCESSING METHOD, AND IMAGE PROCESSING PROGRAM**

(30) Priority: 07.11.2012 JP 2012245222
(71) Applicant: Konica Minolta, Inc., Tokyo 100-7015 (JP)
(72) Inventor: SASHIDA, Takehiko, Tokyo 100-7015 (JP)
(74) Representative: Hoffmann Eitle
(86) International application number: PCT/JP2013/076640
(87) International publication number: WO 2014/073288

(57) **Abstract**

An image processing apparatus serves to estimate a rotation amount between a first image and a second image, at least one of which has a rectangular shape. The image processing apparatus includes a CPU (102) having an angle estimation unit (10). The angle estimation unit (10) includes: an amplitude component derivation unit (12) for frequency-converting the first image and the second image to derive an amplitude component of each of the first image and the second image; an adjustment unit (13) for adjusting the image having a rectangular shape for increasing a size of a shorter side so as to be equal to a size of a longer side on a frequency space; a conversion unit (15) for performing polar coordinate conversion of the amplitude component of the first image and the amplitude component of the second image after adjustment; and a matching unit (16) for outputting the rotation amount between the first image and the second image by calculating an amount of deviation between positions of polar coordinate conversion images.

## Description

### TECHNICAL FIELD

The present invention relates to an image processing apparatus, an image processing method and an image processing program for estimating a rotation amount of an image.

### BACKGROUND ART

As a process of estimating a rotation amount for detecting how much an image used as a comparison object is rotated relative to a reference image (template), a method of rotating the template using a template matching method represented by SAD (Sum of Absolute Differences) and SSD (Sum of Squared Differences) is conventionally often used.

The above-described method however poses problems such as increased processing time.

As an example of the method for solving the above-described problem, there is a proposed method referred to as RIPOC (Rotation Invariant Phase Only Correlation) for frequency-converting an image to obtain an amplitude component thereof, which is then subjected to polar coordinate conversion, thereby estimating a rotation amount, as disclosed in Japanese Patent Laying-Open No. 10-124667 (hereinafter referred to as PTD 1).

When an image rotates, the frequency component of the image also changes. While the change of the phase component in the frequency component is very complicated, the amplitude component exhibits rotation in accordance with the rotation of the image. Also, this change does not depend on the position of the center of rotation. RIPOC is a method focusing attention on such characteristics of the amplitude component. Specifically, according to RIPOC, an image is frequency-converted to obtain an amplitude component thereof, which is then subjected to polar coordinate conversion, thereby creating a polar coordinate image having an angle θ in the X direction and a radius r in the Y direction. Then, the polar coordinate images are matched to each other.

When the polar coordinate images are matched to each other, the deviation in the X direction corresponds to an angle deviation in an actual image. Accordingly, the rotation amount can be estimated from the matching result.

### CITATION LIST

### PATENT DOCUMENT

PTD 1: Japanese Patent Laying-Open No. 10-124667

### SUMMARY OF INVENTION

### TECHNICAL PROBLEM

According to the conventional RIPOC, however, the shapes of a reference image (template) and another image used as a comparison object both are limited to a square. In other words, the conventional RIPOC is based on the premise that when a square-shaped image having the same size (number of pixels) in the X direction and in the Y direction and used as a target object is rotated, the amplitude component obtained by frequency-converting this image is also rotated by the same amount.

In this way, according to the conventional RIPOC, no consideration is taken for the case where the image is not square, which causes a problem that the shape of the template is limited to a square, for example. In other words, there occurs a problem that the process of estimating the rotation amount cannot be performed for the image having different horizontal and vertical sizes.

The present invention has been made in light of the above-described problems. An object of the present invention is to provide an image processing apparatus, an image processing method and an image processing program by which the rotation amount can be estimated even in the case where the image has different horizontal and vertical sizes.

### SOLUTION TO PROBLEM

In order to achieve the above-described object, according to an aspect of the present invention, an image processing apparatus is provided for estimating a rotation amount between a first image and a second image, at least one of which has a rectangular shape. The image processing apparatus includes: a derivation unit for frequency-converting the first image and the second image to derive an amplitude component of each of the first image and the second image; an adjustment unit for adjusting an image of the first and second images that has a rectangular shape for increasing a size of a shorter side so as to be equal to a size of a longer side on a frequency space; a conversion unit for performing polar coordinate conversion of the amplitude component of the first image and the amplitude component of the second image where the image of the first and second images that has a rectangular shape is adjusted by the adjustment unit; and a matching unit for outputting the rotation amount between the first image and the second image by calculating an amount of a positional deviation between a polar coordinate conversion image of the amplitude component of the first image and a polar coordinate conversion image of the amplitude component of the second image.

According to another aspect of the present invention, an image processing method is a method of estimating a rotation amount between a first image and a second image, at least one of which has a rectangular shape. The image processing method includes the steps of: frequency-converting the first image and the second image to derive an amplitude component of each of the first image and the second image; adjusting an image of the first and second images that has a rectangular shape for increasing a size of a shorter side so as to be equal to a size of a longer side on a frequency space; performing polar coordinate conversion of the amplitude component of the first image and the amplitude component of the second image after the adjustment; and outputting the rotation amount between the first image and the second image by calculating an amount of a positional deviation between a polar coordinate conversion image of the amplitude component of the first image and a polar coordinate conversion image of the amplitude component of the second image.

According to still another aspect of the present invention, an image processing program is a program causing a computer to execute a process of estimating a rotation amount between a first image and a second image, at least one of which has a rectangular shape. The image processing program includes the steps of: frequency-converting the first image and the second image to derive an amplitude component of each of the first image and the second image; adjusting an image of the first and second images that has a rectangular shape for increasing a size of a shorter side so as to be equal to a size of a longer side on a frequency space; performing polar coordinate conversion of the amplitude component of the first image and the amplitude component of the second image after the adjustment; and outputting the rotation amount between the first image and the second image by calculating an amount of a positional deviation between a polar coordinate conversion image of the amplitude component of the first image and a polar coordinate conversion image of the amplitude component of the second image.

### ADVANTAGEOUS EFFECTS OF INVENTION

According to the present invention, even in the case where an image has different horizontal and vertical sizes, the rotation amount between the first image and the second image can be estimated.

### BRIEF DESCRIPTION OF DRAWINGS

Fig. 1 is a block diagram showing a specific example of the configuration of an image processing apparatus according to an embodiment.
Fig. 2 is a schematic diagram showing an algorithm of a rotation amount estimation process according to the first embodiment.
Fig. 3 is a diagram showing a specific example of an amplitude component image before and after adjustment according to the first embodiment.
Fig. 4 is a diagram showing a specific example of the amplitude component image before and after adjustment according to the first embodiment.
Fig. 5 is a diagram for illustrating an influence of rotation during matching in the case where a search image has a rectangular shape.
Fig. 6 is a diagram for illustrating an influence of rotation during matching in the case where the search image has a square shape.
Fig. 7 is a diagram for illustrating polar coordinate conversion, including (A) showing an image before conversion and (B) showing an image after conversion.
Fig. 8 is a block diagram showing a specific example of the function configuration of an image processing apparatus according to the first embodiment.
Fig. 9 is a flowchart showing the flow of a corresponding-point searching operation in the image processing apparatus according to the first embodiment.
Fig. 10 is a schematic diagram showing an algorithm of a rotation amount estimation process according to the second embodiment.
Fig. 11 is a diagram showing a specific example of a real space image before and after adjustment according to the second embodiment.
Fig. 12 is a diagram showing a specific example of a real space image before and after adjustment according to another method.
Fig. 13 is a diagram showing a specific example of the real space image before and after adjustment according to another method.
Fig. 14 is a flowchart showing the flow of a corresponding-point searching operation in an image processing apparatus according to the second embodiment.
Fig. 15 is a diagram for illustrating rotation in the case where an image has a rectangular shape.

### DESCRIPTION OF EMBODIMENTS

### <Description of Rotation>

First, a description will be made with regard to rotation in the case where an image has a rectangular shape before describing embodiments of the present invention.

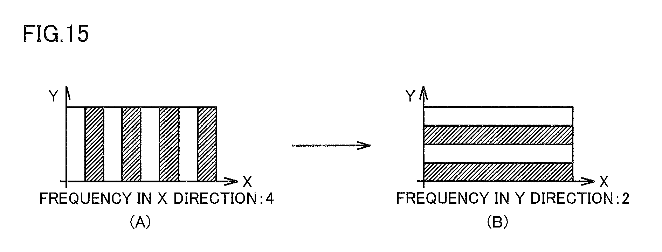

Fig. 15 is a diagram for illustrating rotation in the case where an image has a rectangular shape. As shown in Fig. 15(A), it is assumed that a region having a rectangular shape of 256 pixels (in the X direction) × 128 pixels (in the Y direction) includes an image having a stripe pattern of 1/64 (cycle/pixel) in real space drawn in the X direction. The frequency of this image in the X direction reaches 256 pixels/64 pixels = 4 (cycles/256 pixels). When this image of a stripe pattern is rotated 90°, the stripe pattern remains at 1/64 (cycle/pixel) while the frequency in the Y direction reaches 128 pixels/64 pixels = 2 (cycles/128 pixels) as shown in Fig. 15(B). In other words, since the size (the number of pixels) is different between the X direction and the Y direction, the size used as a basis when calculating a spatial frequency is also different. Although the spatial frequency in a real space has been described in this case, the similar problem is to occur also when an image is frequency-converted.

In this way, in the case where an image has a rectangular shape, the cycles per pixel are maintained even when the image is rotated. However, the resolution of the spatial frequency, that is, the size used as a basis when calculating a spatial frequency, is different between the X direction and the Y direction. Accordingly, even in the case where the same photographic subject is employed, the frequency distribution shape is to be distorted depending on the rotation amount.

As set forth above, in RIPOC, a change in the frequency component is treated as a change of the angle. Accordingly, it is necessary to check how the same frequency component changes. When the frequency is changed by rotation, comparison using the same frequency component cannot be made, with the result that angle estimation cannot be made.

The embodiments of the present invention will be hereinafter described with reference to the accompanying drawings. In the following description, the same parts and components are designated by the same reference characters. Names and functions thereof are also the same. Accordingly, the detailed description thereof will not be repeated.

### <Apparatus Configuration>

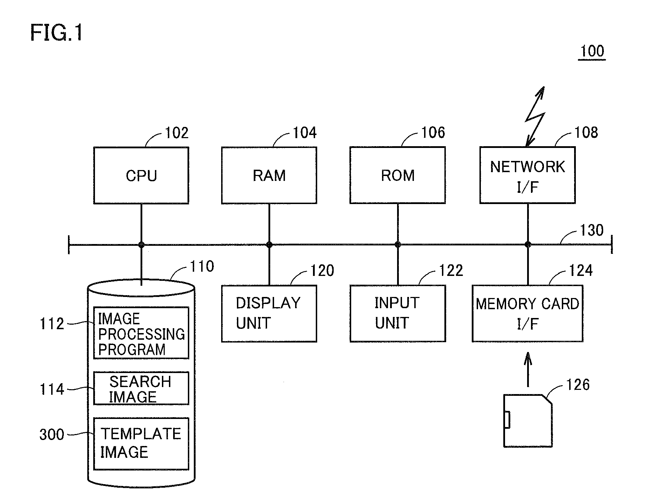

Fig. 1 is a block diagram showing a specific example of the configuration of an image processing apparatus 100 according to an embodiment. Fig. 1 shows an example in the case where image processing apparatus 100 according to the present embodiment is implemented by a commonly-used personal computer.

Specifically, referring to Fig. 1, image processing apparatus 100 is mounted mainly on a computer having a general-purpose architecture. Referring to Fig. 1, image processing apparatus 100 consists of main components including a CPU (Central Processing Unit) 102, a RAM (Random Access Memory) 104, a ROM (Read Only Memory) 106, a network interface (I/F) 108, an auxiliary storage device 110, a display unit 120, an input unit 122, and a memory card interface (I/F) 124. Each component is communicatively connected to each other through a bus 130.

CPU 102 executes various programs such as an operating system (OS) and an image processing program stored in ROM 106, auxiliary storage device 110 or the like, thereby controlling the entire image processing apparatus 100.

RAM 104 functions as a working memory for executing a program in CPU 102, and primarily stores various pieces of data required for executing the program.

ROM 106 stores an initial program (a boot program) and the like that are executed in image processing apparatus 100 at the time of startup.

Network I/F 108 exchanges data with other devices (a server device or the like) through various kinds of communication media. More specifically, network I/F 108 performs data communication through a wired line such as Ethernet (registered trademark) (LAN (Local Area Network), WAN (Wide Area Network), and the like) and/or a wireless line such as wireless LAN.

Auxiliary storage device 110 is typically formed of a large capacity magnetic storage medium such as a hard disk and the like, and stores an image processing program 112 for implementing various processes according to the present embodiment, a search image 114 to be processed, a template image 300, and the like. Furthermore, auxiliary storage device 110 may store a program such as an operating system.

Search image 114 and template image 300 are stored, for example, in order to search the position on search image 114 (the second image) corresponding to template image 300 (the first image) recorded in advance. The main body of image processing apparatus 100 does not need to have a function of imaging a photographic subject, but may obtain these images using a mechanism similar to that of a digital camera that will be described later, and then, input these images into image processing apparatus 100 by an arbitrary method. More specifically, these images are input into image processing apparatus 100 through network I/F 108 or memory card I/F 124 described above.

Display unit 120 displays a GUI (Graphical User Interface) screen provided by an operating system, an image produced by execution of image processing program 112, and the like.

Input unit 122, which typically consists of a keyboard, a mouse, a touch panel and the like, outputs the contents of instructions received from the user to CPU 102 and the like.

Memory card I/F 124 writes and reads data into and from various memory cards (nonvolatile storage medium) 126 such as an SD (Secure Digital) card and a CF (Compact Flash^{®}) card. Typically, memory card I/F 124 is equipped with memory card 126 storing an input image having been obtained through a certain device. Then, the input image read from this memory card 126 is stored (copied) in auxiliary storage device 110.

Image processing program 112 stored in auxiliary storage device 110 is distributed while being stored in storage medium such as a CD-ROM (Compact Disk-Read Only Memory) or delivered from a server device and the like through a network. Image processing program 112 may execute a process by invoking, at a prescribed timing and in a prescribed sequence, a required module from program modules provided as part of the operating system executed by image processing apparatus 100 (a personal computer). In this case, image processing program 112 itself does not include a module provided by the operating system, but image processing is implemented in cooperation with the operating system. Furthermore, image processing program 112 is not a program as a single entity, but may be provided while being incorporated in part of a certain program. Also in such a case, image processing program 112 itself does not include such a module as being utilized in common in this certain program, but image processing is implemented in corporation with this certain program. Even such image processing program 112 that does not include some of the modules does not deviate from the object of image processing apparatus 100 according to the present embodiment.

Furthermore, a part or all of functions provided by image processing program 112 may be implemented by dedicated hardware.

In addition, image processing apparatus 100 according to the present embodiment is not limited to those implemented by a commonly-used personal computer as illustrated in Fig. 1, but may be implemented by the configuration similar to that of a digital camera, a terminal device such as a mobile phone, and the like. Furthermore, at least one server device may be configured like a so-called cloud service that implements the process according to the present embodiment. The configuration assumed in this case is such that the user transmits search image 114 and template image 300 to a server device (on the cloud side) using his/her own terminal (a personal computer, a smart phone, and the like), and then, the server device side performs image processing according to the present embodiment for search image 114 and template image 300 that have been transmitted. Furthermore, the server device side does not have to execute all functions (processes), but the terminal on the user side and the server device may cooperate with each other to implement the image processing according to the present embodiment.

### <Summary of Operation>

In image processing apparatus 100 according to the present embodiment, a corresponding-point searching operation accompanied with rotation amount estimation is carried out. Specifically, in the corresponding-point searching operation, image processing apparatus 100 performs a rotation amount estimation process for detecting how much another image used as a comparison object (hereinafter referred to as a search image) rotates with respect to the image used as a reference (hereinafter referred to as a template image).

In the rotation amount estimation process, generally when the template matching method such as SAD (Sum of Absolute Differences) or SSD (Sum of Squared Differences) is employed, a template image is rotated for matching, thereby estimating an angle. According to this method, however, if the angle is estimated for example with accuracy of 1°, the template needs to be rotated at 0° to at 359°, that is, rotated 360 times for matching, so that the processing time is to be lengthened. Therefore, according to image processing apparatus 100 of the present embodiment, an angle estimation method in accordance with the RIPOC (Rotation Invariant Phase Only Correlation) method is employed to estimate the rotation amount for performing a corresponding-point searching operation. According to the RIPOC method, the image is frequency-converted to obtain an amplitude component thereof, which is then subjected to polar coordinate conversion for making a comparison, thereby estimating the rotation amount between a plurality of images.

### [First Embodiment]

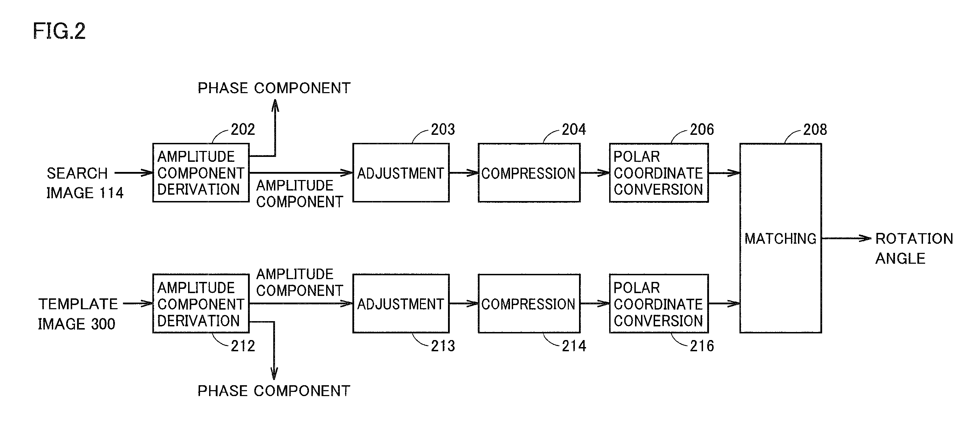

Fig. 2 is a schematic diagram showing an algorithm of the rotation amount estimation process according to the first embodiment. Referring to Fig. 2, the algorithm of the rotation amount estimation process according to the first embodiment includes: amplitude component derivation processes 202, 212; adjustment processes 203, 213, compression processes 204, 214, polar coordinate conversion processes 206, 216; and a matching process 208.

In amplitude component derivation processes 202 and 212, a search image and a template image, respectively, are converted into frequency components (an amplitude component and a phase component), thereby obtaining amplitude components. Fourier transform is employed in this conversion, but Laplace transform or the like may be employed. In the RIPOC method, a phase component is not necessarily required, and therefore, does not have to be calculated. The search image and the template image each have a quadrangular shape with 4 right angles, and at least one of the images has a rectangular shape having different horizontal and vertical sizes.

In the rotation amount estimation process according to the first embodiment, adjustment processes 203 and 213 include a process of adjusting the side having less frequency components (hereinafter referred to as a shorter side) to the side having more frequency components (hereinafter referred to as a longer side) on a frequency space. In other words, a process of adjusting the vertical and horizontal sizes to be equal to each other on the frequency space is carried out. This process is comparable to that the size (the number of pixels) having a frequency of 1, that is the size of the unit frequency, is adjusted to be the same both on the vertical and horizontal sides of the same image without changing the cycles per pixel on real space. Since the cycles per pixel are not changed, the information on the frequency component (amplitude component) is maintained before and after the adjustment process.

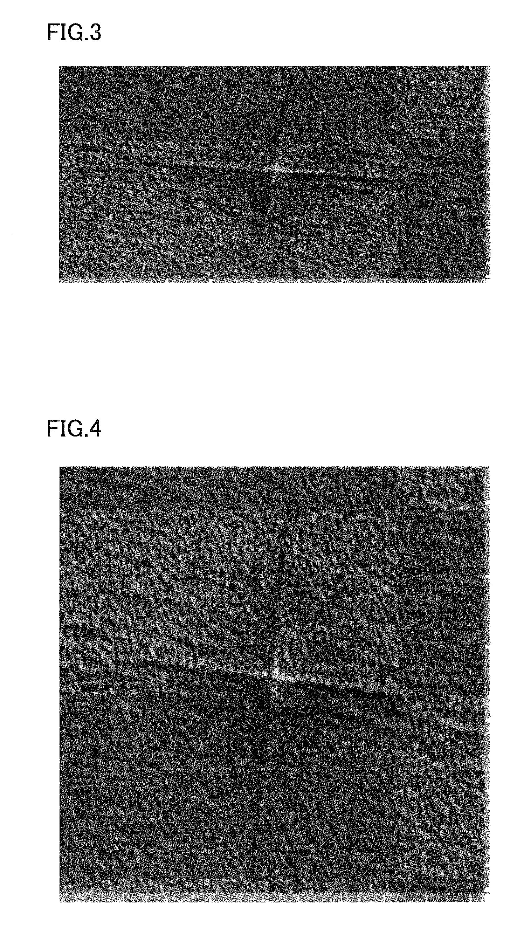

Figs. 3 and 4 each are a diagram showing a specific example of the amplitude component image before and after adjustment according to the first embodiment. In Figs. 3 and 4, the vertical axis and the horizontal axis show frequency components (amplitude components) in the X-Y directions. As shown in Figs. 3 and 4, the side having less frequency components (shorter side) is increased to the same size of the side having more frequency components (longer side) so as to be equal in size to each other. The method of interpolating a portion not including the information about size increase is carried out using an average value of the coordinate values in the peripheral area, but other methods may be employed. By this adjustment, the frequency component is maintained even in the case where the image is rotated, so that angle estimation can be made.

In the case of the algorithm of the rotation amount estimation process, adjustment processes 203 and 213 only have to be performed for at least one of the template image and the search image. In other words, in the case where the template image has a rectangular shape having different vertical and horizontal sizes and the search image has a square shape, the adjustment process is carried out only for the template image.

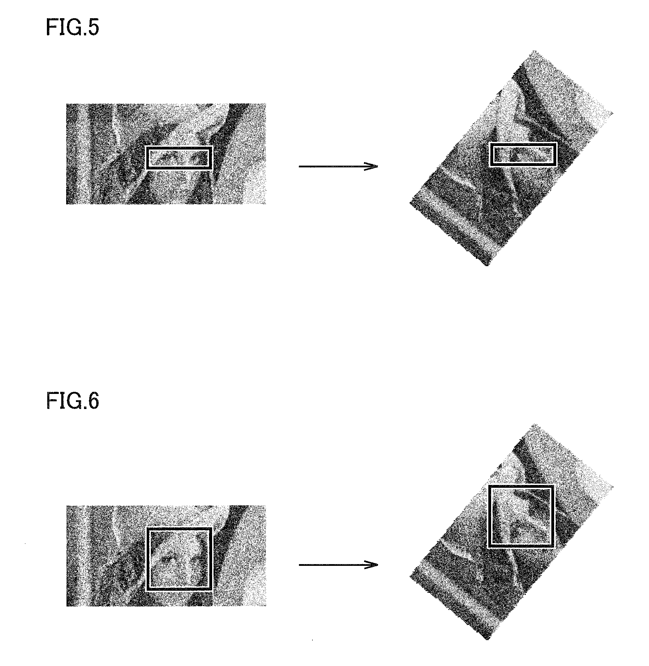

Figs. 5 and 6 are diagrams for illustrating the influence of rotation during matching in the cases where the search image has a rectangular shape and where the search image has a square shape, respectively. As describes later, when the rotation amount is estimated in the rotation amount estimation process, image processing apparatus 100 rotates the template image and then performs a process of matching the template image to the search image, thereby estimating the position of the template image on the search image.

Then, an explanation will be given with regard to the case where a rectangular image (a region indicated by a frame in the figure) including person's both eyes is set as a template image as shown in the right-side figure in Fig. 5. In the case where the search image has a rectangular shape of the same size of the template image, when the image is not rotated, the same region as that of the template image in the right-side figure in Fig. 5 can be set, so that the search image can be matched to the template image. On the other hand, when the image is rotated, as in the left-side figure in Fig. 5, a region including both eyes cannot be set as a search image, so that the photographic subject (both eyes) is cut off in the image. Consequently, the search image cannot be matched to the template image.

In contrast, when the search image has a square shape as shown in Fig. 6, the photographic subject can be less likely to be cut off in the image unlike in Fig. 5. In other words, not only when the image is not rotated (the right-side figure in Fig. 6), but also when the image is rotated (the right-side figure in Fig. 6), the region including both eyes can be set as a search image. Specifically, in this case, the template image has a rectangular shape while the search image has a square shape. Even if the template image and the search image are different in shape in this way, the rotation amount can be estimated by adjusting the template image in adjustment processes 203 and 213. Accordingly, for example, by using a search image having a square shape for a template image having a rectangular shape, it becomes possible to suppress the template image from including an unnecessarily object, and also, possible to avoid such a situation that a photographic subject is cut off in the image by a large rotation amount so that searching cannot be made.

The amplitude components of the search image and the template image are compressed in compression processes 204 and 214, respectively. Examples of the compression method may be a logarithmic method, a method of calculating a square root, a method of multiplying N by a prescribed value N less than 1, and the like. The amplitude component is compressed, so that influences caused by a certain amount of noise and a light-dark change can be reduced.

In polar coordinate conversion processes 206 and 216, the amplitude components of the search image and the template image, respectively, that have been compressed are converted into polar coordinate components. By this conversion, the rotation angle is represented as a coordinate point on the two-dimensional coordinates.

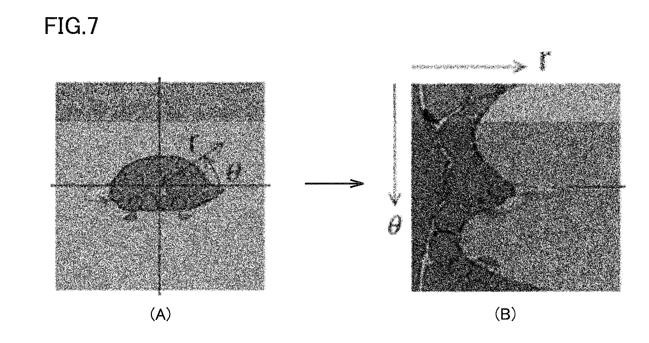

Fig. 7 is a diagram for illustrating polar coordinate conversion, including (A) showing an image before conversion and (B) showing an image after conversion. As shown in Figs. 7(A) and 7(B), by polar coordinate conversion processes 206 and 216, each amplitude component of the image is converted into a polar coordinate component represented by an angle θ in the X direction and represented by a radius r in the Y direction. In addition, Fig. 7 shows polar coordinate conversion of an image in real space for the sake of clarity.

In matching process 208, the amount of a positional deviation is calculated by matching the results obtained by polar coordinate conversion that are output from polar coordinate conversion processes 206 and 216. The polar coordinate component has one axis showing angle θ and the other axis showing radius r. Accordingly, the amount of deviation on the θ side is to represent the rotation amount.

As the above-described matching method, a POC (Phase Only Correlation) method can be used, but a matching method such as SAD and SSD may be alternatively used. When the POC method is employed, matching process 208 is carried out to calculate a POC value (similarity degree) distribution of the same size as the image size in one process to specify the peak position in this distribution, thereby detecting the amount of deviation. In other words, matching process 208 is carried out to specify the position at which the similarity degree is the highest among the results achieved by polar coordinate conversion, and output the rotation angle corresponding thereto as an estimated rotation amount.

In addition, Fig. 2 shows an example in which adjustment processes 203 and 213 are carried out before compression processes 204 and 214. When adjustment processes 203 and 213 are carried out before compression processes 204 and 214, the adjustment can be made based on the amplitude component of much finer grain size, so that accuracy can be improved. The order of these processes is however not limited to the order illustrated in Fig. 2. In other words, adjustment processes 203 and 213 may be carried out after compression processes 204 and 214, or may be carried out after polar coordinate conversion processes 206 and 216. Although the data before compression processes 204 and 214 is more likely to be influenced by changes in lighting or shading, variations caused by such noise can be suppressed by performing adjustment processes 203 and 213 after compression processes 204 and 214. Therefore, the order of these processes is preferably changed in accordance with the photographic subject or the environment.

### <Function Configuration>

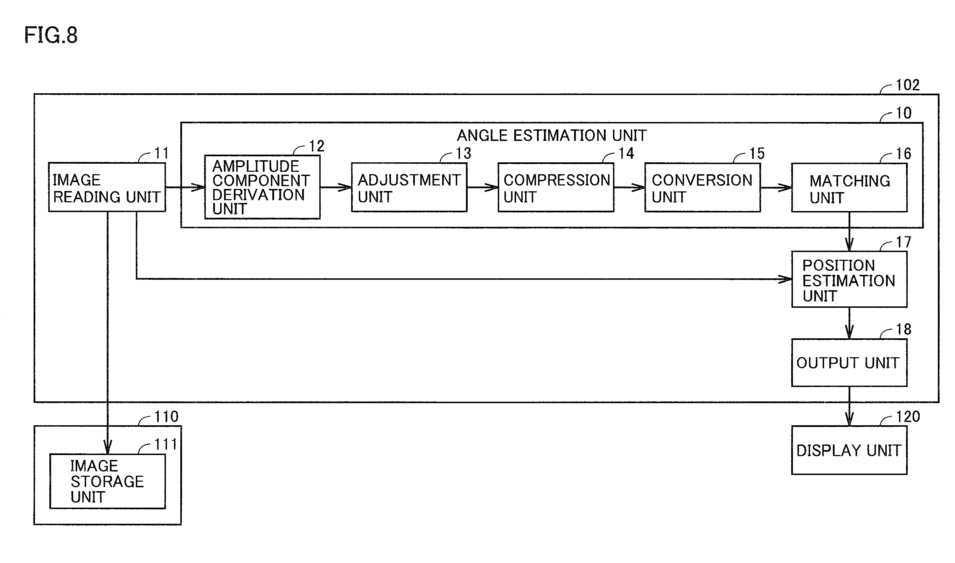

Fig. 8 is a block diagram showing a specific example of the function configuration of image processing apparatus 100 according to the first embodiment for carrying out the corresponding-point searching operation accompanied with rotation amount estimation described above. Each function in Fig. 8 is implemented mainly on CPU 102 of image processing apparatus 100 by this CPU 102 reading a program stored in ROM 106, auxiliary storage device 110 or the like onto RAM 104 and executing this program, but at least a part of the function may be implemented by the hardware configuration shown in Fig. 1.

Referring to Fig. 8, auxiliary storage device 110 is provided with an image storage unit 111 serving as a storage area for storing search image 114 and template image 300.

Further referring to Fig. 8, image processing apparatus 100 has a main function configuration including an angle estimation unit 10, an image reading unit 11, a position estimation unit 17, and an output unit 18.

Image reading unit 11 reads search image 114 and template image 300 from image storage unit 111, and inputs these images into angle estimation unit 10.

Angle estimation unit 10 includes: an amplitude component derivation unit 12 for performing amplitude component derivation processes 202, 212; an adjustment unit 13 for performing adjustment processes 203, 213; a compression unit 14 for performing compression processes 204, 214; a conversion unit 15 for performing polar coordinate conversion processes 206, 216; and a matching unit 16 for performing a matching process 208.

Position estimation unit 17 specifies the rotation angle between search image 114 and template image 300 based on the results of the matching process in matching unit 16; corrects the angle of template image 300 so as to make angle rotation thereof; and matches search image 114 and template image 300, thereby estimating the position of the search image on template image 300, and then, inputting the position information into output unit 18.

Output unit 18 may output the position information, for example, by causing display unit 120 to display this position information, or may output the position information from network I/F 108 through various communication media to other devices.

### <Operation Flow>

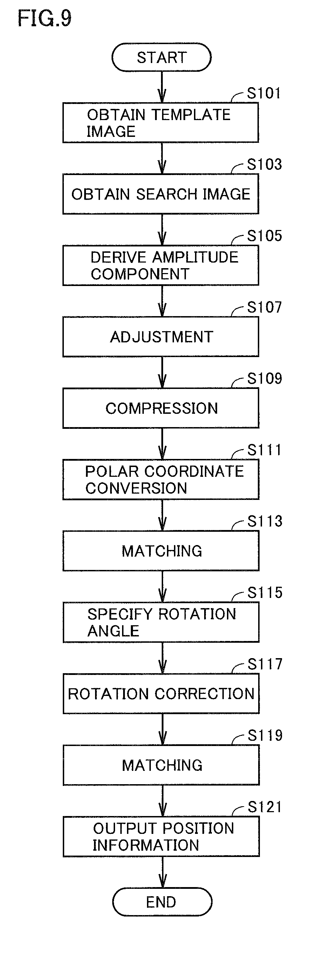

Fig. 9 is a flowchart showing the flow of the corresponding-point searching operation in image processing apparatus 100 according to the first embodiment. The operation shown in the flowchart of Fig. 9 is implemented by CPU 102 of image processing apparatus 100 reading a program stored in ROM 106, auxiliary storage device 110 or the like onto RAM 104 and executing this program for carrying out each function in Fig. 8.

Referring to Fig. 9, a template image and a search image are first obtained (steps S101 and S103). At least one of the template image and the search image is an image having a rectangular shape. Then, each image is frequency-converted to derive an amplitude component thereof (step S105). Then, the above-described adjustment is carried out for at least one of the images (an image having a rectangular shape) such that the vertical and horizontal sizes become equal to each other on the frequency space (step S107).

Then, the amplitude components of the search image and the template image are compressed (step S109), and the compressed amplitude components of the search image and the template image are converted into polar coordinate components (step S111). These polar coordinate images are matched, thereby calculating the amount of deviation between the positions of these images (step S113).

Since the amount of deviation on the θ side is to represent the rotation amount, the rotation amount (rotation angle) between the template image and the search image is specified based on the amount of deviation obtained in the above-described step S113 (step S115).

When the rotation amount is estimated, one of the images (for example, a template image) undergoes a rotation correction by the above-described rotation angle (step S117), and matched to the search image (step S119). The position information showing the position of the template image on the search image estimated by the matching process is output as information showing a corresponding point (step S121).

### [Second Embodiment]

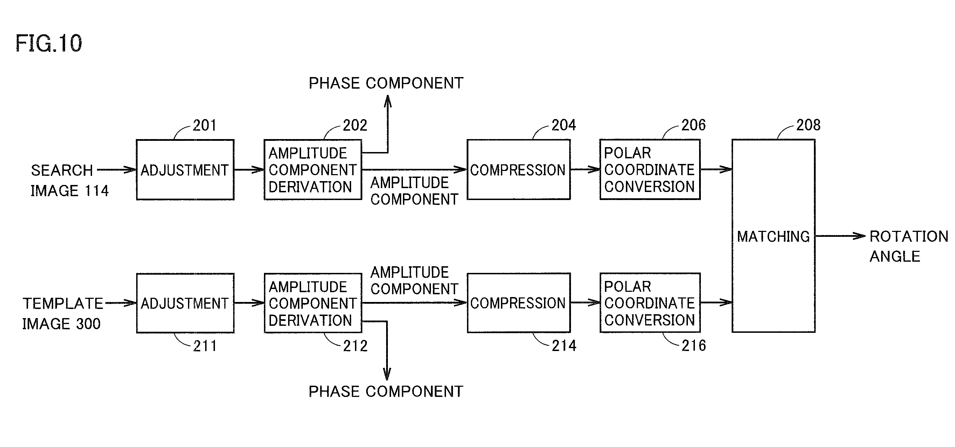

Fig. 10 is a schematic diagram showing an algorithm of the rotation amount estimation process according to the second embodiment. Referring to Fig. 10, the algorithm of the rotation amount estimation process according to the second embodiment includes: adjustment processes 201, 211; amplitude component derivation processes 202, 212; compression processes 204, 214; polar coordinate conversion processes 206, 216; and a matching process 208.

In the rotation amount estimation process according to the second embodiment, in adjustment processes 201 and 211, when an image has different vertical and horizontal sizes on real space, the size (the number of pixels) having a frequency of 1, that is the size of the unit frequency, is adjusted to be the same both on the vertical and horizontal sides without changing the cycles per pixel. In other words, the process of adding image information is carried out so as to adjust the size of the shorter side to be equal to the size of the longer side without changing the cycles per pixel on real space. Then, in amplitude component derivation processes 202 and 212, the image after adjustment is frequency-converted to derive an amplitude component thereof.

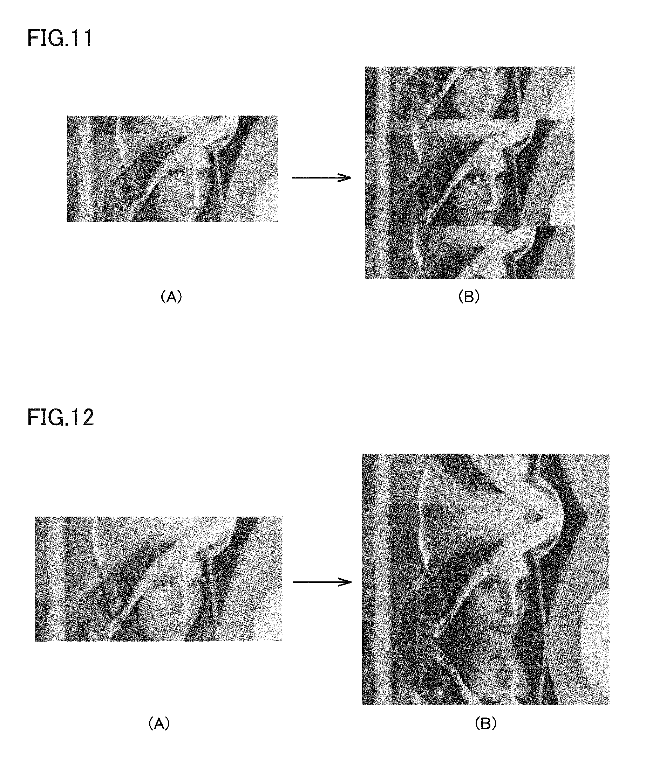

Fig. 11 is a diagram showing a specific example of a real space image before and after adjustment according to the second embodiment. As shown in Fig. 11, an example of the method for an adjustment process may be a method of adjusting the side including fewer number of pixels of the image (hereinafter referred to as a shorter side) so as to be equal in size to the side including greater number of pixels (hereinafter referred to as a longer side). In this case, when the image is processed to be enlarged, the cycles per pixel are to be changed. Accordingly, the image is treated as a periodic image having an image edge connecting to the edge of the image on the other side, in which the image on the opposite side is added to the image edge, thereby increasing the size of the image. By this adjustment, the amplitude component obtained after frequency conversion is increased such that the size of the shorter side becomes equal to the size of the longer side on the frequency space as in Fig. 4, with the result that the vertical and horizontal sizes become equal to each other.

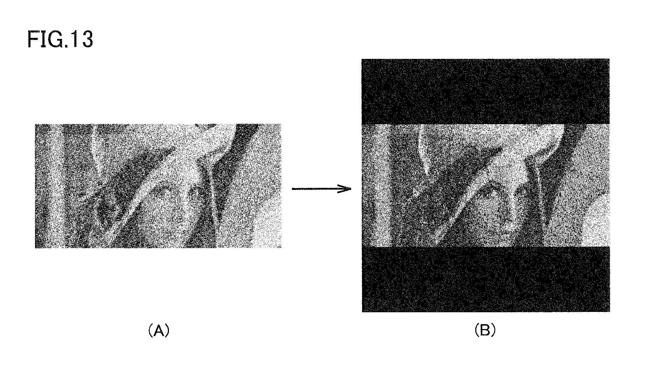

In addition, the size increasing method in the adjustment process is not limited to the method illustrated in Fig. 11, but may be another method. Figs. 12 and 13 each are a diagram showing a specific example of each real space image before and after adjustment by another method. Another example for size increase in the adjustment process may include a method of increasing the size by folding an image (adding a reversed image) as shown in Fig. 12. Furthermore, another example may include a method of increasing the size by filling up blank space with a prescribed value (for example, 0) (adding a prescribed value (for example, 0)), as shown in Fig. 13.

In the Fourier transform that is one of the conversion methods used in amplitude component derivation processes 202 and 212, a signal component is calculated as a periodic function. For example, in an image having an edge exhibiting a prescribed value (for example, 0) as shown in Fig. 13(B), a signal abruptly changes, which may therefore cause a problem that a frequency component that does not essentially exist is observed during frequency conversion. This influence can however be reduced by applying a window function such as a hanning window before the Fourier transform. Accordingly, the method of adding a prescribed value as shown in Fig. 13 can be employed as a size-increasing method in the adjustment process.

### <Function Configuration>

The function configuration of image processing apparatus 100 according to the second embodiment is almost the same as that of image processing apparatus 100 according to the first embodiment shown in Fig. 8. In image processing apparatus 100 according to the second embodiment, in angle estimation unit 10, adjustment unit 13 performs adjustment processes 201 and 211, and inputs the obtained results into amplitude component derivation unit 12. The amplitude component calculated in amplitude component derivation unit 12 is input into compression unit 14.

### <Operation Flow>

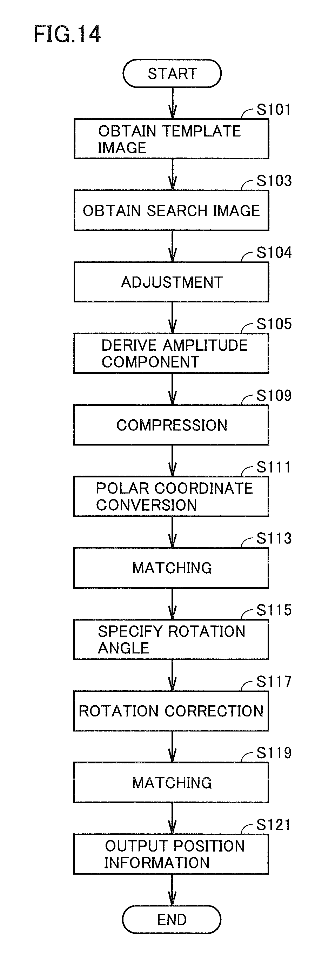

Fig. 14 is a flowchart showing the flow of the corresponding-point searching operation in image processing apparatus 100 according to the second embodiment. The operation shown in the flowchart in Fig. 14 is also implemented by CPU 102 of image processing apparatus 100 reading the program stored in ROM 106, auxiliary storage device 110 or the like onto RAM 104 and executing the program to carry out each function in Fig. 8.

Referring to Fig. 14, in image processing apparatus 100 according to the second embodiment, when the processes in the above-described steps S101 and S103 are performed to obtain a template image and a search image, the above-described adjustment is carried out on real space for at least one of the images (an image having a rectangular shape) (step S104). The image after adjustment is frequency-converted to derive an amplitude component thereof (step S105). The same process as that in the case of image processing apparatus 100 according to the first embodiment in and after S109 described above is subsequently carried out, so that the position information is output.

### <Effects of the Embodiment>

In image processing apparatus 100 according to the present embodiment, when the rotation amount is estimated during the corresponding-point searching operation, an image of a rectangular shape having different vertical and horizontal sizes is employed as at least one of the search image and the template image. Then, this image is adjusted such that the resolution of the spatial frequency, that is, the size used as a basis when calculating the spatial frequency, has the same value both on the vertical side and the horizontal side. Thereby, when the rotation amount is estimated using the amplitude component obtained when an image is frequency-converted, the angle between these images can be estimated irrespective of the shape of the template image or the search image.

In addition, this adjustment may be carried out on the frequency space or may be carried out on the real space. In the former case, the calculation amount can be reduced as compared with the case where the adjustment is carried out on the real space. In the latter case, interpolation can be carried out with higher accuracy than that in the case of interpolation carried out during adjustment on the frequency space. Accordingly, accuracy can be improved.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

10 angle estimation unit, 11 image reading unit, 12 amplitude component derivation unit, 13 adjustment unit, 14 compression unit, 15 conversion unit, 16 matching unit, 17 position estimation unit, 18 output unit, 100 image processing apparatus, 102 CPU, 104 RAM, 106 ROM, 108 network I/F, 110 auxiliary storage device, 111 image storage unit, 112 image processing program, 114 search image, 120 display unit, 122 input unit, 126 memory card I/F, 130 bus, 201, 211, 203, 213 adjustment process, 202, 212 amplitude component derivation process, 204, 214 compression process, 206, 216 polar coordinate conversion process, 208 matching process, 300 template image.

## Claims

1. An image processing apparatus estimating a rotation amount between a first image and a second image, at least one of which has a rectangular shape, said image processing apparatus comprising:
a derivation unit for frequency-converting said first image and said second image to derive an amplitude component of each of said first image and said second image;
an adjustment unit for adjusting an image of said first and second images that has a rectangular shape for increasing a size of a shorter side so as to be equal to a size of a longer side on a frequency space;
a conversion unit for performing polar coordinate conversion of the amplitude component of said first image and the amplitude component of said second image where the image of said first and second images that has a rectangular shape is adjusted by said adjustment unit; and
a matching unit for outputting the rotation amount between said first image and said second image by calculating an amount of a positional deviation between a polar coordinate conversion image of the amplitude component of said first image and a polar coordinate conversion image of the amplitude component of said second image.

2. The image processing apparatus according to claim 1, wherein said adjustment unit increases the size of the shorter side by performing interpolation so as to be equal to the size of the longer side on the frequency space after said image having a rectangular shape is frequency-converted by said derivation unit.

3. The image processing apparatus according to claim 1, wherein, before said image having a rectangular shape is frequency-converted by said derivation unit, said adjustment unit adds image information such that the shorter side becomes equal in size to the longer side without changing cycles per pixel on a real space.

4. The image processing apparatus according to any one of claims 1 to 3, further comprising a compression unit for compressing the amplitude component of said first image and the amplitude component of said second image.

5. The image processing apparatus according to claim 4, wherein said compression unit compresses the amplitude component of said first image and the amplitude component of said second image after adjustment by said adjustment unit.

6. The image processing apparatus according to claim 2, further comprising a compression unit for compressing the amplitude component of said first image and the amplitude component of said second image, wherein
said adjustment unit carries out said adjustment on the frequency space after said image having a rectangular shape is compressed.

7. A method of estimating a rotation amount between a first image and a second image, at least one of which has a rectangular shape, said method comprising the steps of:
frequency-converting said first image and said second image to derive an amplitude component of each of said first image and said second image;
adjusting an image of said first and second images that has a rectangular shape for increasing a size of a shorter side so as to be equal to a size of a longer side on a frequency space;
performing polar coordinate conversion of the amplitude component of said first image and the amplitude component of said second image after said adjustment; and
outputting the rotation amount between said first image and said second image by calculating an amount of a positional deviation between a polar coordinate conversion image of the amplitude component of said first image and a polar coordinate conversion image of the amplitude component of said second image.

8. An image processing program causing a computer to execute a process of estimating a rotation amount between a first image and a second image, at least one of which has a rectangular shape, said image processing program comprising the steps of:
frequency-converting said first image and said second image to derive an amplitude component of each of said first image and said second image;
adjusting an image of said first and second images that has a rectangular shape for increasing a size of a shorter side so as to be equal to a size of a longer side on a frequency space;
performing polar coordinate conversion of the amplitude component of said first image and the amplitude component of said second image after said adjustment; and
outputting the rotation amount between said first image and said second image by calculating an amount of a positional deviation between a polar coordinate conversion image of the amplitude component of said first image and a polar coordinate conversion image of the amplitude component of said second image.
